# EUROPEAN PATENT APPLICATION

(11) **EP 3 482 637 A1**
(43) Date of publication of application: **15.05.2019**
(21) Application number: 17827877.6
(22) Date of filing: 06.07.2017
(51) Int. Cl.: A23C 11/10, A23F 5/46, B02C 7/18

(54) **METHOD AND SYSTEM FOR MANUFACTURING VEGETABLE SUBSTITUTE MILK**

(30) Priority: 11.07.2016 KR 20160087379
(71) Applicant: Kim, Jong Hae, Gimpo-si, Gyeonggi-do 10129 (KR); Kim, Michael J., Reseda, CA 91335 (US)
(72) Inventor: MOON, Jung Ok, Gimpo-si Gyeonggi-do 10129 (KR); HAN, Kyung Ja, Namyangu-si Gyeonggi-do 12103 (KR); KIM, Jong Hae, Namyangu-si Gyeonggi-do 12103 (KR); KIM, Michael J, Namyangu-si Gyeonggi-do 12103 (US)
(74) Representative: Mewburn Ellis LLP
(86) International application number: PCT/KR2017/007254
(87) International publication number: WO 2018/012804

(57) **Abstract**

The present invention provides a method and system apparatus for mass production of vegetable substitute milk by combining nutritional components and health functional components of cereals including quinoa, amaranth, or soybean in order to solve side effects occurring since a human beings consumes cow's milk used for the rapid growth of calves.

More specially, the present invention provides a method and system apparatus wherein, in order to solve the problem in which a chemical emulsifying agent has to be added for the emulsification between purified water and an oil component of a material, including quinoa, amaranth, or soybean when the material is prepared into a milk form of liquid, the material is diffused and then finely pulverized by a nano-pulverizing unit, thereby mass-producing pure vegetable milk substitute, which is as soft as milk, through the molecular binding between nanoparticles of the material and water molecules of the purified water without adding any chemical agent.

In addition, the present invention provides a technology of manufacturing a pure vegetable substitute milk, in which nutritional components and functional components of cereals including quinoa, amaranth, or soybeans, are combined to design and mass-produce pure vegetable substitute milk, which contains nutritional components and functional components and is most ideal for human health through molecular binding between nanoparticles of each material and water molecules of purified water, thereby solving the side effects due to existing cow's milk and contributing to the promotion of human health.

## Description

### [Field of Invention]

The present invention is a continuing application of PCT/KR2010/002592, which was filed on March 8, 2010 by the same applicant.

The present invention relates to a method and system apparatus for mass production of pure vegetable milk substitute, which is superior to cow's milk in terms of nutritional and functional components, by combining nutritional and functional components of grains selected from quinoa, soybeans, or amaranth that is belong to the same series as the quinoa, and molecular binding between nanoparticles of the grain and molecules of water in order to solve side effects that can occur when human beings consume cow's milk, thereby FAO(Food and Agriculture Organization, UN) announced quinoa is a nutritional alternative to human breast milk,

More specifically, when producing a liquid similar to milk from material selected from the group of grains including quinoa, amaranth, or beans, the chemical emulsifier and stabilizer should be added to emulsify the oil ingredient of the materials and the purified water, it was found that emulsifiers caused enteritis as well as metabolic syndrome, and the stabilizer, 'carrageenan' induced cancer by animal testing, therefore, the present invention provides an industrial mass production solution that the materials is diffused and finely pulverized by a nano-pulverizing unit thereafter, manufacturing a vegetable milk alternative which is as soft as milk through molecular binding between nanoparticles of the materials and water molecules of the purified water without adding any chemical agent,

### [Description of the Related Art]

There is growing distrust of the milk since the various reports on the research of harmfulness of dairy milk on the human body was recently made public through the internet (*see "Got the Facts on Milk" on YouTube*) and the results have shown that insulin (IGF-1) contained in the existing milk to accelerate calf growth rapidly proliferates cancer cells in the human body. It was also shown that the occurrence rate of prostate cancer and ovarian cancer was more than 3-4 times higher in countries where the population consumed more dairy milk, than that of countries where the population consumed less. Also, a large amount of saturated fat (2,268mg/100ml) and cholesterol contained in milk can cause heart disease, and the animal protein (casein) acidifies the blood to promote the aging of the human body and drain calcium from the body. as a result, more calcium is drained than absorbed from consuming milk.

The previously mentioned facts continue to be published in the form of videos *(YouTube*) or as research papers in academic circles. A study found that drinking more than 3 cups of milk per day may increase the risk of heart disease and more than doubles the risk of death *(Uppsala University, Sweden, 2014*)*.* The spread of this information on the internet has caused global milk consumption to decline rapidly, and has increased the need for developing a pure vegetable milk substitute that can replace animal milk.

Since the publication of studies on the side effects of dairy milk as previously mentioned, a vegetable milk alternative using soybean has been exposed to the market and various types of soymilk that use soybeans are being produced in order to replace cow's milk. However, there are critical problems adding a large amount of chemical emulsifier and stabilizer to emulsify the soybean's oil fat ingredients and water. Also, soybean starch can cause digestive problems and lead to an intrinsic malodorous smell.

It was found that emulsifiers can emulsify even harmful nitrogenous substances which are contained in foods, and these are then absorbed into the intestines to cause enteritis and metabolic syndrome approved by the animal test *(*March issue of the Nature in 2015)*.* Especially, the stabilizer 'carrageenan' is easily absorbed into the intestines but it is known to cause cancer since it does not naturally dissolve in human cells and thus, it accumulates in the intestines through a self-collapsing process *(*October 2001 issue of the Environmental Health Perspectives*),* as result, even emulsifiers and 'carrageenan' have been approved as additives in many countries although they are still harmful chemicals for the health of human beings.

In order to solve the previously listed problems of the conventional method for manufacturing soy milk, the applicant has invented a new technology to produce soy milk by finely pulverizing soybeans into nanoparticles after roasting the beans in a heat chamber, which heats the beans until metamorphoses a component of the starch into soluble dextrin and after that molecular binding between the bean's nanoparticles and purified water without adding any chemicals. The technology is registered as PCT/KR2010/002592 and the applicant holds US Patent 8,518,464, Japanese Patent 5686383, Chinese Patent 1522244, and Korean Patent 101145164.

However, in the previous method had a critical problem in that the fat oil ingredients of the beans were agglomerated together to form larger clusters with the driving parts inside of the wet nano pulverizing device, and the same problem occurred with all of the other grains. Thus, the object of the present invention is to provide improvement of the technology for industrial mass production of pure vegetable milk substitute without agglomerating problems in the device, nor adding any chemicals.

The soybean is known as one of the most complete foods in human history and the virtue of soybeans has been medically proven by the U.S. Food and Drug Administration (FDA) by officially recognizing that eating more than 25g of soy protein per day can reduce the risk of heart disease, and the American Heart Association recommends eating soy protein to reduce the risk of heart disease.

Soybeans have five anti-cancer ingredients: lecithin, phytic acid, phytosterol, saponin, and isoflavones. In addition to these anticancer substances, the proteins, carbohydrates, lipids, minerals, and other components contained in beans plays role of delaying the aging process, of human body, enhancing immunity, and removing carcinogenic substances that occur in the human body.

It is known that long-term ingestion of soybeans can prevent colon cancer, breast cancer, and so on. Isoflavone, which is present about 0.2 to 0.4% in soybeans is weakly bound to the estrogen receptor, thereby reducing the growth of cancer cells and simultaneously promoting normal cell division.

Animal testing and studies on medical tissue cultivation found that the soybean's isoflavone may inhibit the action of enzymes involved in cancer cell proliferation and express an anti-cancer effect through an antioxidant action. And in animal testing, breast cancer was artificially induced and the isoflavone-administrated group showed significantly lower proliferation of breast cancer cells than those of the other groups, during cell culture experiments, the anticancer effect of isoflavone on breast cancer was proved.

Lecithin contained in a soybean is the important ingredient to maintain the cellular health of the human body as the main ingredient composing cell membrane. And if the intake of lecithin-included foods intensively, it increases the brain memory about 25%, and preventing senile dementia.

It is known that when lecithin is decomposed, a substance called "choline" is produced and this ingredient plays an important role in increasing the amount of neurotransmitters, otherwise known as "acetylcholine", which are lacking in dementia patients.

Soybeans contain a large amount of saponin (soya saponin I, II, A1, A2 and A3), which hinders the aging process through the decomposition of peroxide materials in the body. This effectively contributes to the restraint of fat production in the body to prevent obesity and other adult illnesses such as heart disease, stroke, and arteriosclerosis by dissolving cholesterol in the blood vessels and making blood flow smoothly.

In particular, anthocyanin, a black pigment found in the skin of black beans has not only an antioxidant action (an action to inhibit the activation for toxicity of active oxygen), but also a cholesterol lowering action along with medicinal anti-cancer and anti-ulcer effects. Anthocyanin improves visual function by activating the production of a pigment called "rhodopsin", which senses light in the retina and delivers signals to the brain.

As described above, soybeans contain various functional ingredients, however, the human body lacks a galactosidase enzyme that is needed to digest soybean starch ingredients, which can lead to digestive problems. Soybean starch, when improperly digested becomes fermented by bacteria in the intestines and induces gas. Its fishy flavor and intrinsic malodorous smell can keep people from regularly consuming beans as a staple food..

On the other hand, quinoa which originated in the Andes highlands of South America about 3-4 thousand years ago is called "the mother of grains." When compared to soybeans, it contains 2 times more protein, 6 times more potassium, 3 times more calcium, 4 times more iron, 6.5 times more magnesium, 3 times more phosphorus (P), 7 times more vitamin B1, 6 times more B2, 2.7 times more B6, and 6 times more vitamin E. and BBC recognized quinoa as a superfood, NASA chose it as food for space flight, and FAO acknowledged quinoa as a grain that can nutritionally replace breast milk. since quinoa has the highest nutritional value among all other grains and its protein quality is the most complete among plants and animals.

Quinoa is better than milk since it contains not only 9 essential amino acids that are necessary for human tissue growth, but it is also composed of the "milk-like amino acid." Its vegetable protein content is double that of soybeans and it has nutritive components similar to milk, not containing gluten, an excellent digestion and absorption. When compared to the fact that large amounts of saturated fat and cholesterol contained in milk may cause heart disease, quinoa is an unsaturated fat and thereby is free of cholesterol. Contrarily, it contains large amounts of magnesium that can cure heart disease and hypertension.

The growth insulin (IGF-1) contained in milk is a cancer-causing factor that can proliferate cancer cells in the human body. However, quinoa contains saponin, pantothenic acid (vitamin B2), and the main components of ginseng, Omega-3 and Omega-9 which have excellent anticancer and antioxidant effects. Also, it has no gluten components and contains an even amount of various minerals and vitamins such as protein, dietary fiber, calcium, potassium, iron, zinc, etc. Its digestion rate is superior to that of other grains and it is optimal nutrition for infants, growing children, the elderly, and the infirm.

In addition, amaranth is a gluten-free grain that is native to the Andean alpine region in South America. Similar to quinoa, it has been proven by studies to have an excellent effect on hypertension, diabetes, and hyperlipidemia because it contains a large amount of vegetable "squalene" and "polyphenol." Along with quinoa, it has attracted worldwide attention as well as quinoa..

However, problems can arise since the conventional methods for making a liquid using the previously mentioned materials is normally squeezing the materials after boiling. A large amount of waste is generated after squeezing, which can result in low production efficiency and cause digestive problems due to the starch ingredient contained in the material. Thus It is not suitable for infants, the elderly, or the infirm because a large amount of sugar is added to eliminate its intrinsic malodorous smell and this can cause obesity.

In addition, the conventional method for manufacturing liquid requires a large amount of chemical emulsifier as well as the stabilizer 'carrageenan' to prevent an entangling problem after squeezing which may cause enteritis, metabolic syndrome, and induce cancer in animal tests. Therefore, a new method for manufacturing pure vegetable milk alternative without adding any chemical agents are needed.

### [Detailed Description of the Invention]

### [Objective of the Invention]

The object of the present invention is to eliminate the problem of industrially finely pulverizing a large amount of grain into nanoparticles due to the oil ingredient contained in the grain, and provide an effective system apparatus for grinding grains into nano-grade particles for binding molecules between the nanoparticles of the materials with the molecules of purified water to make a pure vegetable milk alternative.

Furthermore, this invention provides a system that can increase productivity by about 40% when compared to the conventional method, which generates waste composed of grain curd refuse, skins, and embryos.

In addition, the present invention provides a method and a system apparatus to solve the problem of adding a large amount of chemicals such as emulsifier and stabilizer to prevent tangling of the materials after squeezing which cause metabolic syndrome and cancer, as proven by animal testing.

The other objective of the invention is to provide a technique to make an ideal vegetable milk alternative that is as soft as cow's milk and superior in nutritional and functional ingredients, by the method of molecular binding of the nanoparticles of grains and the molecules of water, according to the design of the combination of nutritional and functional ingredients of various grains without adding any emulsifier or stabilizer.

### [Technical Solution]

In order to solve the problem above, the present invention provides an effective solution for the industrial mass production of nanoparticles without agglomerating the fat oil ingredients of grains in a wet nano-grinding device or beads mill by the method of grinding the grains after forming a suspension by a high pressure diffusion means with particles of the grains grinded after a process selected from roasting, boiling, or boiling after roasting of the grains with purified water, thereafter grinding the suspension into nano-grade particles with a wet nano-grinding device for industrial mass production.

The present invention uses breakthrough technology to reduce the cost of raw materials by about 1/2, since it does not produce any waste such as bean curd, needs not any chemical such as emulsifier or stabilizer, and reduces the amount of sugar added for the purpose of removing the grains' intrinsic malodorous smell.

In addition, the present invention provides a method for manufacturing a pure vegetable milk alternative by molecular binding between nanoparticles of grain and purified water after forming a suspension of the grains through diffusion, without adding any chemicals. Thereof, it solves the problems of conventional techniques that require a chemical emulsifier or stabilizer in order to emulsify the fat oil ingredients contained in cereal materials such as quinoa, amaranth, or soybeans.

### [Effects of the Invention]

The present invention reduces production cost by about 1/2, since it does not produce any waste, not needed any chemical agents and the amount of sugar used for the purpose of removing the intrinsic malodorous smell of the grains is reduced.

In addition, the current invention provides a solution to eliminate the risk of metabolic syndrome or carcinogenic risk caused by using a chemical agents such as emulsifier or stabilizer.

Furthermore, this invention provides an effective method to improve the immune system for human beings by ingesting a functional ingredient that has great antioxidant effects since It provides the customized functional nourishing foods through the selective combination of the functional components of grains such as quinoa, amaranth, or soybeans.

Moreover, the present invention provides a mass-production solution to producing a pure vegetable milk alternative that has better nutrients value than cow's milk and as smooth as milk by the method of molecular binding with the ideal combination of nutritional and functional ingredients of various grains and water according to the design of the vegetable milk alternative without adding any chemical agents.

In addition, the invention has the ability to upgrade the industry of yogurt and ice cream for manufacturing a chemical free yogurt and ice cream utilizing the ideal pure vegetable milk alternative of the invention through its functional ingredients and nutrition selected from grains such as quinoa, amaranth, and beans.

Furthermore, the present invention has the ability to upgrade the coffee industry by replacing the creamer based on cow's milk with the vegetable milk alternative of the invention and relieve anxiety that can be caused by dairy.

Moreover, the present invention has the ability to upgrade the health functional food industry by replacing cow's milk and blending antioxidant effects that fight various cancerous diseases and promote human immunity, in addition to the nutritional elements inherent in food materials.

### [Brief Description of the Drawing]

Figure 1 shows a schematic diagram of the method for producing vegetable milk alternative in the present invention.
Figure 2 shows a schematic diagram of the system apparatus for manufacturing vegetable milk alternative the present invention.

### [Best Mode for Implementing the Invention]

1. The current invention provides a solution for manufacturing a pure vegetable milk alternative with grains selected from quinoa, amaranth, or beans through the molecular binding between nanoparticles of grains and purified water, without adding any chemicals such as an emulsifier or stabilizer.
2.Since conventional yogurt has been manufactured by adding a large amount of emulsifier and thickener based on milk, eating yogurt to stay healthy is rather ironic due to the harmful effect caused by chemicals and cow's milk alone. However, the current invention provides a solution for manufacturing a chemical free yogurt made from a pure vegetable milk alternative, that does not contain any harmful chemicals unlike cow's milk.
3. Since conventional ice cream has been manufactured by adding a large amount of emulsifier and thickener based on milk, eating ice cream is rather harmful due to the harmful effect caused by chemicals and cow's milk alone. However, the present invention provides a solution for manufacturing a chemical free ice cream made from a pure vegetable milk alternative, that contains a variety of functional ingredients for health, does not contain any harmful chemicals, and it's free from the risk of cow's milk.
4. The current invention provides a solution for making chemical free baby foods using a pure vegetable milk alternative instead of cow's milk. Therefore, it can provide a healthier and purer vegetable baby food by resolving the existing milk-based issues associated with adding emulsifier and thickener that is harmful for the human body.

### [Detailed Description of the Preferred Embodiments]

With references to the figures attached herein, the configuration of the preferred embodiments, as well as the operations and functions are described in the following details.

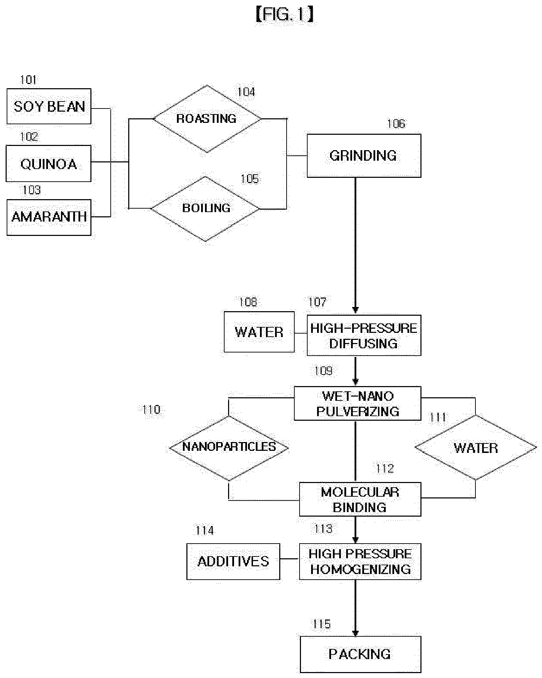

Figure 1 is a schematic diagram of the production method of the present invention for manufacturing the vegetable milk alternative.
Referring to Figure 1, the method for manufacturing the vegetable milk alternative of this invention is comprised the step of, grinding(106)material selected from the group of grains comprising quinoa(103), amaranth(102) and beans(101) after a process selected from roasting(104), boiling(105), or boiling after roasting of the selected material; diffusing(107) the grinded material with adding purified water(108) for converting it into a suspension by diffusing oil ingredient of the grain with a high pressure diffusion means(107); forming the particles of the materials in the suspension into nanoparticles with wet nano-pulverizing means(109) and molecular binding(112) between the nanoparticles of the material(110) of the suspension and molecules of the water(111) during pulverizing process of the wet nano-pulverizing means(109) simultaneously; high pressure homogenizing (113) for mixing an edible additive (114) to reinforce the taste or nutritional components; and packaging (115) for the final product.

In the above steps, the reason for configuring high pressure diffusing step(107) before molecular binding (112) is to form a suspension through the diffusion between the fat oil ingredient contained in the grains and purified water. Thereafter, it is possible to resolve the problem of tangling in the nano-grinding device so that the particles of the grain material contained in the suspension can be finely and effectively pulverized. accordingly it provides a solution which can industrially finely pulverize a large amount of grains into nanoparticles.

In this method, when the particles of grains such as beans, quinoa, or amaranth are smaller in size, the molecular binding becomes more effective thereby the wet nano-grinding step(107) further comprises a plurality of bead mills to circulate the suspension of material starting from the bigger-sized bead mill to the smaller-sized bead mill, sequentially reducing the size of the particles of the material.

In the previous process, a variety of grains containing various nutrient and health functional ingredients other than soybeans, quinoa, or amaranth can be used. The selection of the grain material, whether the skin needs to be removed, the composition ratio to mix with purified water, or the mixing ratio of the edible additive are determined depending on the ingredient design of the vegetable milk substitute to be manufactured.

In the step for diffusing the materials(107), the diffusing means can be composed of one or more combinations selected means among high pressure nano-diffusers such as an ultrasonic disperser, a rotor/slatter diffuser, a high shear mixer, a microfluidizer, a high-pressure homogenizer, a colloid mill, or a disc mill. It is preferred to constitute them to be diffused at high pressure in the microfluidizer or the colloid mill, after mixing the powders of each material and purified water at a certain ratio in the in-line powder/liquid mixer.

In the step for forming the molecular binding(112) between the fine particles of the material contained in the suspension and the water molecules of purified water is caused by the grinding process of the wet nano-pulverizing means such as bead mill or the like which grinding the fine particles of the suspension into nanoparticles and forming molecular binding between the nanoparticles and water simultaneously combined with the high pressure of the wet nano-pulverizing means.

In the step for forming molecular binding(112), if the size of the particles is grinded ultra finely, it can be easily binded to water molecules but the relatively large particles become absorbed into the water molecules and diffused in the state. It may be finely pulverized to form the molecular binding state by passing repeatedly and grinding through the wet nano-pulverizing means,

In the current invention, even if some molecules are not binded due to the particle size of the material in the process above, the particles in the diffused state coexist with the molecules in the molecular bonding state and the cohesive force is generated by the van der Waals force, so that no precipitation occurs, which does not hinder the production of the vegetable milk alternative.

In order to enhance the effect of molecular binding, an effective molecular binding device can be constructed in which a plurality of devices selected among nano-grinding devices, including a bead mill, a high-pressure valve device, a high-pressure & high-speed stirring device, a high-pressure homogenizer, a colloid mill, or a disc mill, are linearly arranged to circulate the suspension sequentially.

The theory of molecular binding phenomenon that may occur between water molecules when the grains such as soybean, quinoa, amaranth, or natural food materials are finely pulverized into nanoparticles and mixed with water at the high pressure it's the proven theory by the Johannes Diderik van der Waals that a van der Waals force is generated between electrically neutral molecules and the cohesion may occur due to the attraction between the molecules.

More specifically, in this invention, the reason for grinding the particles of the material into nano-scale is according to the law of nature(Nano Effect) that when an object is divided into nano-scale, the surface area of the property is increased and changes may occur such as ease of drinking, decrease of sedimentation, increase of absorption rate, increase in solubility, extinction of smells, and non-heat sterilizing effect.

In terms of all the materials, the smaller the particle size is, the higher the proportion of atoms on the surface becomes increased, and the atoms constituting the surface are higher in energy than that of the atoms located inside. Thereof in the nano particles, the thermal expansion coefficient is much larger than that of bulk materials due to the existing higher energy per unit atom, the solubility increases as the activation energy required for diffusion becomes low, resulting in the energy saving effect, which is why the material is split into nanoparticles to maximize the surface area. As a result, when the ratio of the atoms occupying the surfaces of the nanoparticles increases, the grain boundary becomes an open structure, and the binding rate with the water molecules of purified water is increased. When they are brought into close contact with each other at high pressure, the intermolecular binding could easily occur at room temperature which will make it possible to produce the vegetable milk alternative without generation of sediment.

Generally, when the food material is divided into nanoparticles of 100 nm or less, there is a tendency that the taste and flavor disappear completely in 10 nm or less, absorbed into the cell tissues and blood vessels of the human body in the 20 nm level. Therefore, the effect that as the particle size of grains including quinoa, amaranth, or beans becomes smaller, the molecular binding can be rapidly implemented due to the increase of the surface area. however, it is debated that extremely refined particles are harmful for the human body and so it is preferable to pulverize it into the particle level of 500 nm to 1000 nm, but the particle size of the grain is not limited in the present invention.

In the present invention, when pulverizing the grains such as soybeans, quinoa, or amaranth after boiling instead of roasting, the molecular binding can be occurred without using any emulsifier or stabilizer and production efficiency increase by about 40% comparing the conventional method for squeezing after boiling the materials since it does not generate waste composed of grain curd refuse, peels and embryos, but in this case the off-flavor due to the starch ingredient still exists. This is not suitable for customers who are sensitive to smell and since the problem of indigestion is still unsolved, it is not appropriate for infants or the elderly who have weak digestive power.

The present invention when finely pulverize the grains such as soybeans, quinoa, or amaranth after roasting, molecular binding can be occurred without using any emulsifier or stabilizer. and it increases production efficiency by about 40%, the starch ingredient of soybean is changed into water-soluble dextrin at a temperature of 160°C or higher and the problems of indigestion and intrinsic off-flavor generation caused by starch are eliminated and suitable for customers who are sensitive to smell and infants or the elderly having weak digestive power. The the metamorphosing temperature of the starch ingredient contained in the material may differ depending on the materials. thereby metamorphosing temperature is not limited.

In the present invention, when finely pulverize the grains comprising soybeans, quinoa, or amaranth after roasting after boiling or boiling after roasting, molecular binding can be occurred without using any chemical agents. and it increases production efficiency by about 40%, and suitable for customers who are sensitive to smell and infants or the elderly having weak digestive power since the starch component of the grains transformed into soluble dextrin.

In the present invention, if it is manufactured with the suspension after removing the skin of the material and then finely pulverizing and mixing through colloid mill with purified water, the milk alternative can be produced using high-pressure homogenization means, and some of the material may be bound in molecules and the rest of the material is diffused in the state, thereof resulting in the same effect.

The edible additive (114) in the present invention is determined according to the ingredient design for the pure vegetable milk alternative to be produced, the delicious milk alternative can be made by adding a variety of juices or spices, and in the case of coffee, the powder of roasted coffee beans or the material selected in instant coffee or liquid coffee is mixed and added to produce the coffee-flavored milk.

If it is preferred that the vegetable milk alternative is inclusive of various functional components, the ultra fine particles or extracts of the following components can be added during the mixing step of grinding, diffusing, or nano-pulverizing. The mixing ratio of the edible functional material can be adjusted according to the design of the vegetable milk alternative in a customizable way by selectively adding powder, juices, or extracts of (1) the leaf plant group, including green tea leaves, ginseng leaves, pine leaves, mulberry leaves, bamboo leaves, barley leaves, lotus leaves, wormwood, chives, water parsley, spinach, etc., (2) the group of bulbs and tubers, including ginseng, red ginseng, deodeok, angelica, solomon's seal, lotus root, burdock, kudzu, chinese yam, garlic, onion, carrot, and balloon flower, (3) the group of fruits, including fruits of hovenia dulcis, corn, lycium, jujube, safflower seed, rubus coreanus fruits, walnut, pomegranate, guava, omija, coffee, cacao, noni, saw palmetto, etc., (4) the fruits and vegetables group, including broccoli, cabbage, eggplant, tomato, lemon, bell pepper, mango, durian, pepper, pumpkin, sesame leaves, carrot, chives, kale, etc., (5) the mushroom group consisting of phellinus linteus, chaga, ganoderma lucidum, truffles, sarcodon aspratus, shiitake, manna lichen, honey fungus, tricholomopsis rutilans, and matsutake, (6) the ascidians group including laver, seaweed, kelp, fusiformis, green laver, seaweed fulvescens, chlorella, spong seaweed, agar-agar, etc., (7) the functional material group containing powder or extract of a material selected from the mineral group including vitamin, calcium, keto acid, and minerals, (8) the sweetener group including glucose, fructose, maltose, oligosaccharide, aspartame, stevioside, erythritol, sorbitol, and xylitol, or (9) the spice group milk flavor, natural fruit juice flavor, and herb flavor; In addition to the functional materials listed above, there are thousands of other health functional materials in the world and new materials are continuously being discovered so there is no limit to the types of functional materials that can be used as additives in the current invention.

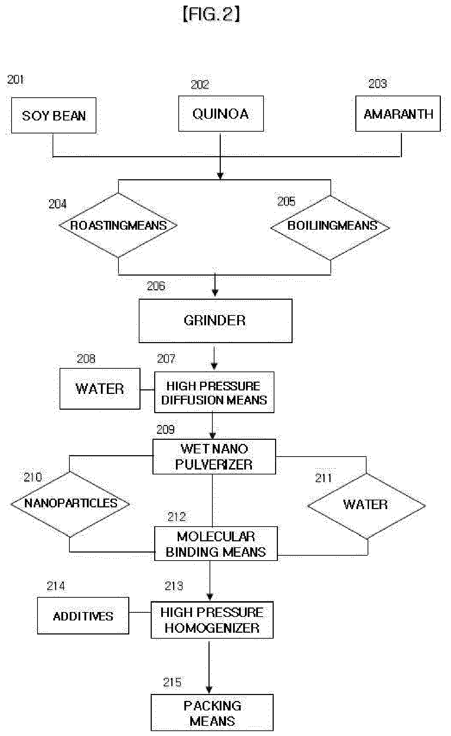

Figure 2 shows a system configuration diagram of the present invention.

Referring to Figure 2, the current invention is comprised of a grinding means(206)for grinding material selected from the group of grains comprising of quinoa, amaranth and soybean after a process selected from roasting, boiling, and boiling after roasting of the selected material, a high pressure diffusion means(207) for forming a suspension through diffusing an oil ingredient of the grinded material with purified water, a wet nano-pulverizing means(209) for grinding the particles in the suspension into nano-scale particle(210) and molecular binding between the nano-scale particles(210) of the suspension and purified water(211) during pulverizing process of the wet nano-pulverizing means simultaneously to produce vegetable milk substitute, and a high pressure homogenizing means(213)for mixing and homogenizing the final liquid to add an edible additive(214) depending on the ingredient design of the vegetable milk alternative.

As described above, the diffusing means for producing the suspension is composed of one or more combinations selected from high pressure nano-diffusers, such as an ultrasonic disperser, a rotor/slator diffuser, a high shear mixer, or a microfluidizer; a high pressure homogenizer; or a colloid mill, and it is desirable to constitute them to be diffused at high pressure in the microfluidizer or the colloid mill, after mixing the powders of each material and purified water at a certain ratio in the in-line powder/liquid mixer.

The means that causes the molecular binding between the fine particles of the suspension and the water molecules of purified water is to be made to induce the molecular binding by a process for finely pulverizing the solid materials of suspension into nanoparticles using a wet nano-pulverizing means, such as a bead mill and the like, and a high pressure homogeniziing process simultaneously.

During the process of pulverizing particles with a wet nano-pulverizing means(209), particles with small sizes can be easily binded to water molecules, the relatively large particles become absorbed into the water molecules and diffused in the state, and while passing repeatedly through the wet nano-pulverizing, the diffused particles may be finely pulverized to form the molecular binding state.

In order to rapidly induce the molecular binding, an effective molecular binding device can be constructed in which a plurality of wet nano-pulverizers may be constructed in a linear way, or a range of devices selected from a bead mill, a high-pressure valve device, a high-pressure & high-speed stirring device, a high-pressure homogenizer, and a colloid mill are linearly arranged, and in the system above, the number of devices could be reduced by making the suspension circulate repeatedly.

Although 100% of the suspensions diffused in the present invention may not bind with water molecules, it coheres with each other with the diffused state and the molecular binding state coexist and precipitation does not occur. Therefore, the high quality milk alternative can be produced without adding any emulsifier or stabilizer.

In the present invention, the same effect can be obtained by additionally composing the peeling means of the material, even though the peeled material is roasted or boiled and finely pulverized, the suspension is produced in a colloid mill, and the vegetable milk alternative is manufactured by conducting the molecular binding or diffusion utilizing a high-pressure homogenizer.

In the production of the vegetable milk alternative in the present invention, in terms of soybeans, at least one or more soybeans selected from the group comprising soybeans, kidney beans, rhynchosia nulubilis, medicine beans, adzuki beans, mung beans, peas, yellow beans, white beans, green kernel black bean, black soybeans, lentils, chick peas, and chia seeds, are utilized with the skin or selectively used with the skin off.

In order to supplement nutrients in the grinding step, the grain can be selectively mixed from the group of materials including unpolished rice, germinated brown rice, barley, oats, corn, millet, buckwheat, sorghum, proso or walnuts, pistachio, almonds, cashew nuts, pecans, macadamia, hazelnuts, brazil nuts, pine nuts, hemp seeds, peanuts, sunflower seeds, pumpkin seeds, linseeds, and ginkgo nuts, and in the current invention, there is no limit to the kind of edible materials that can be mixed.

As described above, the system of the present invention provides an effective and economical system device for producing the most ideal vegetable milk alternative combining nutritional and functional ingredients of grains including quinoa, amaranth or soybean according to manufacturers' design, therefore the invention contribute to upgrading the activation of the industry in this field.

As explained, the invention may be embodied in other specific forms without departing from the spirit or essential characteristics thereof, the present invention is therefore to be considered in all respects as illustrative and restrictive, the scope of the invention being indicated by the appended claims rather than by forgoing description and all changes which come within the meaning and range of equivalency of the claims are therefore intended to be embraced therein.

### [Industrial Applicability]

The present invention provides a new technology to develop the vegetable milk substitute industry to replace conventional cow's milk which causes harmful side effects when humans ingest cow's milk that is used for the fast growth of calves, therefore the invention provides mass production technologies for manufacturing the pure vegetable milk substitute by combining various nutritional and functional ingredients of various grains according to the design of an ideal vegetable milk substitute that could replace conventional milk industry in terms of nutritional and functional ingredients.

In addition, the invention provides technology that can upgrade the industry for manufacturing a chemical free yogurt utilizing a pure vegetable milk substitute instead of cow's milk to solve the problems caused by chemicals and side effects of dairy milk.

The present invention provides technology that can upgrade the ice cake industry for manufacturing a chemical free ice cream, ice bar and sherbet utilizing the vegetable milk substitute instead of cow's milk.

This invention provides technology that can upgrade the conventional confectionery and baking industry by replacing cow's milk with the vegetable milk substitute of the present invention to avoid the side effects of conventional cow's milk.

The present invention provides a technology that can upgrade the conventional baby food or RTE (Ready To Eat) industries since no chemicals are added that could cause indigestion due to the starch ingredient.

The present invention provides a solution for manufacturing healthy beverages such as soy drinks with grains that have various nutritional and functional ingredients of the grains without adding any chemicals to replace conventional carbonated beverages.

The present invention can be utilized to upgrade the dietary supplement industry and promote a healthier diet, since an ideal combination of nano-scale nutritional and functional ingredients of grains and additives can be added according to the design of the supplement.

## Claims

1. A method for manufacturing vegetable substitute milk using grains, the method comprising the step of,
(1) grinding material selected from the group of grains comprising of quinoa, amaranth and beans after a process selected from roasting, boiling, or boiling after roasting of the selected material.
(2) diffusing the grinded material with purified water for forming a suspension with a high pressure diffusion means for diffusing an oil ingredient of the material and the water, and,
(3) forming the particles of the material of the suspension into nanoparticles with a wet nano-pulverizing means and then molecular binding between the nanoparticles of the material and water molecules of the purified water simultaneously during the pulverizing process of the nano-pulverizing means to produce the vegetable substitute milk.

2. The method of claim 1, further comprising a step for peeling the material before the grinding step.

3. The method of claim 1, further comprising a step for mixing a powder of heterogeneous materials before the diffusing step.

4. The method of claim 1, further comprising a mixing step for mixing the heterogeneous suspensions which has passed through the diffusion step, before forming nano-pulverizing step.

5. The method of claim 1, wherein nano-pulverizing step, further comprising the nano-pulverizing means configuring the combination of the means selected from a bead mill, a disk mill, a colloid mill, a high-pressure homogenizer to sequentially reduce the size of the particles and trigger molecular binding by repeatedly circulating the suspension of the material.

6. A system apparatus for manufacturing a vegetable substitute milk using grains, the system comprising of,
(1) a component for primary grinding material selected from the group of grains comprising quinoa, amaranth and beans after a process selected from roasting, boiling, or boiling after roasting of the selected material.
(2) a component of high pressure diffusion means for forming a suspension by diffusing an oil ingredient of the material and the water, and,
(3) a component comprising of at least one of wet nano-pulverizing means for grinding the particles of the material of the suspension into nanoparticles and then binding molecules between the nanoparticles of the material and water molecules of the purified water simultaneously during the pulverizing process of the wet nano-pulverizing means to produce the vegetable substitute milk.

7. The system apparatus of claim 6, further comprising a mixing means for mixing a powder or a suspension of heterogeneous grain materials

8. The system apparatus of claim 6, wherein the nano-pulverizing means further comprising a combination of selected apparatus from a bead mill, a high-pressure valve means, a high-speed stirring means, a high-pressure homogenizing means, and a colloid mill.

9. The system apparatus of claim 6, further comprising additional constitution of homogenizing for selectively mixing a fine powder, a juice, or an extract of the material that is added to produce heterogeneous beverages, depending on the ratio of design of the vegetable substitute milk to be manufactured.

10. The system apparatus of claim 6, wherein the molecular binding means further comprising a plurality of bead mills for circulating the suspension of material in order from the bigger-sized bead mill to the smaller-sized bead mill to sequentially reduce the size of particles of the material.

11. The system apparatus of claim 6, further comprising a means for peeling the material before the primary grinding means.
